# EUROPEAN PATENT APPLICATION

(11) **EP 4 832 311 A1**
(43) Date of publication of application: **28.10.2026**
(21) Application number: 24907171.3
(22) Date of filing: 05.12.2024
(51) Int. Cl.: H02K 3/34, C08K 3/013, C08K 3/36, C08L 63/00, H01F 27/32

(54) **THERMOSETTING RESIN COMPOSITION AND STATOR**

(30) Priority: 19.12.2023 JP 2023213558
(71) Applicant: Sumitomo Bakelite Co., Ltd., Shinagawa-ku Tokyo 140-0002 (JP)
(72) Inventor: YAMAMOTO, Jun, Tokyo 140-0002 (JP)
(74) Representative: Müller-Boré & Partner Patentanwälte PartG mbB
(86) International application number: PCT/JP2024/043041
(87) International publication number: WO 2025/134785

(57) **Abstract**

Provided is a thermosetting resin composition used for forming a sealing member (resin sealing part (65)) in a stator (4) including a stator core (41) having a plurality of tooth parts (7) and a plurality of slots (8) alternately formed in a circumferential direction, a coil (9) wound around the slot (8) and accommodated in the slot (8), and the sealing member (resin sealing part (65)) provided in the slot (8) to seal the coil (9), the thermosetting resin composition containing an epoxy resin, a curing agent, and an inorganic filler, in which, in a particle size distribution of the inorganic filler, D90 is 40 µm or more and 70 µm or less, and D10 is 0.1 µm or more and 1.0 µm or less.

## Description

### TECHNICAL FIELD

The present invention relates to a thermosetting resin composition and a stator.

### BACKGROUND ART

As a technology of using a resin material for a stator core, there is a technology described in Patent Document 1 (Japanese Unexamined Patent Publication No. 2003-284277). The document discloses a rotating electric machine including a stator in which a plurality of coils are wound around a stator core formed by laminating a plurality of electromagnetic steel sheets at a predetermined interval, a rotor held rotatably with respect to this stator, and a cooling frame fixing the stator, in which a highly heat-conductive composite material with slots that are winding portions of a stator and are formed of a thermosetting resin having an anisotropic structure in the resin component, is disposed, and it is assumed that due to such a configuration, a rotating electric machine that easily transfers heat generated in the coils and has satisfactory heat dissipation properties is provided.

### RELATED DOCUMENT

### PATENT DOCUMENT

[Patent Document 1] Japanese Unexamined Patent Publication No. 2003-284277

### SUMMARY OF THE INVENTION

### TECHNICAL PROBLEM

Meanwhile, a resin composition serving as an insulating member may be filled between a coil accommodated in a slot of a stator and the stator, and both electrical insulation properties and inter-coil filling properties have been required.

The present invention has been made in view of such circumstances, and an object of the present invention is to provide a technique of achieving both electrical insulation properties and inter-coil filling properties when a coil is disposed in a slot and a resin composition is filled between a stator and the coil.

### SOLUTION TO PROBLEM

According to the present invention, the following technologies are provided.
<1> A thermosetting resin composition used in a stator, which has a stator core including a plurality of tooth parts and a plurality of slots formed alternately in a circumferential direction, a coil wound around and accommodated in the slot, and a sealing member provided in the slot to seal the coil, for forming the sealing member, the thermosetting resin composition containing:
   an epoxy resin;
   a curing agent; and
   an inorganic filler,
   in which, in a particle size distribution of the inorganic filler, D90 is 40 µm or more and 70 µm or less, and D10 is 0.1 µm or more and 1.0 µm or less.
<2> The thermosetting resin composition according to <1>,
   in which a ratio D90/D10 of the D90 to the D10 in the particle size distribution is 100 or more and 300 or less.
<3> The thermosetting resin composition according to <1> or <2>,
   in which a ratio D90/D50 of the D90 to D50 in the particle size distribution is 4 or more and 8 or less.
<4> The thermosetting resin composition according to any one of <1> to <3>,
   in which a content of the inorganic filler is 90% by mass or more and 93% by mass or less with respect to a total amount of the thermosetting resin composition.
<5> The thermosetting resin composition according to any one of <1> to <4>,
   in which the inorganic filler includes at least one selected from the group consisting of alumina, fused silica, and crystalline silica.
<6> The thermosetting resin composition according to <4>,
   in which the inorganic filler contains 60% by mass or more of the alumina with respect to the total amount of the thermosetting resin composition.
<7> The thermosetting resin composition according to any one of <1> to <6>,
   in which a gelling time is 40 seconds or longer and 100 seconds or shorter.
<8> The thermosetting resin composition according to any one of <1> to <7>,
   in which a thermal conductivity of a cured product of the thermosetting resin composition is 3.2 W/mK or more.
<9> The thermosetting resin composition according to any one of <1> to <8>,
   in which the epoxy resin includes at least one selected from the group consisting of a biphenyl-type epoxy resin, a bisphenol-type epoxy resin, a stilbene-type epoxy resin, a novolac-type epoxy resin, a polyfunctional epoxy resin, a phenol aralkyl-type epoxy resin, and a naphthol-type epoxy resin.
<10> The thermosetting resin composition according to any one of <1> to <9>,
   in which a glass transition point is 175°C or higher.
<11> A stator including:
   a stator core including a plurality of tooth parts and a plurality of slots formed alternately in a circumferential direction;
   a coil wound around and accommodated in the slot; and
   a sealing member provided in the slot to seal the coil,
   in which the sealing member is formed of a cured product of the thermosetting resin composition according to any one of <1> to <10>.

### ADVANTAGEOUS EFFECTS OF INVENTION

According to the present invention, it is possible to provide a technique of achieving both electrical insulation properties and inter-coil filling properties when a coil is disposed in a slot and a resin composition is filled between a stator and the coil.

### BRIEF DESCRIPTION OF THE DRAWINGS

Fig. 1 is a cross-sectional view in a direction perpendicular to a rotational axis direction of a motor.
Fig. 2 is a longitudinal cross-sectional view in the rotational axis direction of the motor.
Fig. 3 is an enlarged view showing a periphery of a slot.
Fig. 4 is a cross-sectional view showing an interior of the slot.

### DESCRIPTION OF EMBODIMENTS

Hereinafter, embodiments of the present invention will be described with reference to the drawings. In all drawings, similar constituent elements will be assigned with similar reference numerals, and description thereof will not be repeated. In the present specification, the description "a to b" in a numerical range indicates "equal to or greater than a and equal to or less than b" unless otherwise specified.

### <Outline>

In the present embodiment, a technique for achieving both electrical insulation properties and inter-coil filling properties is provided by defining a particle size distribution (D90, D10, and the like) of an inorganic filler contained in a thermosetting resin composition used for forming a sealing member provided in a slot so as to seal a coil in a stator of a rotary electric machine such as a motor.

### <Motor>

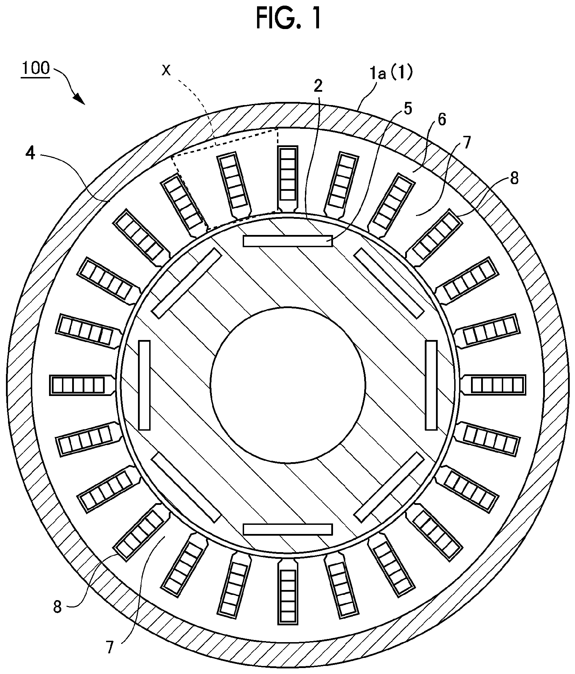

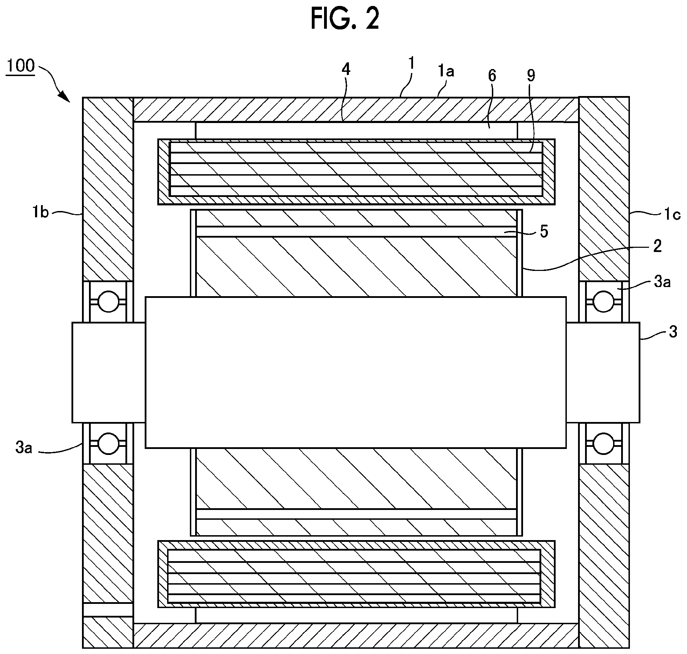

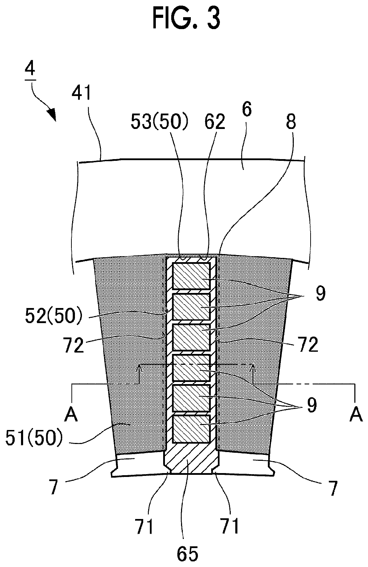

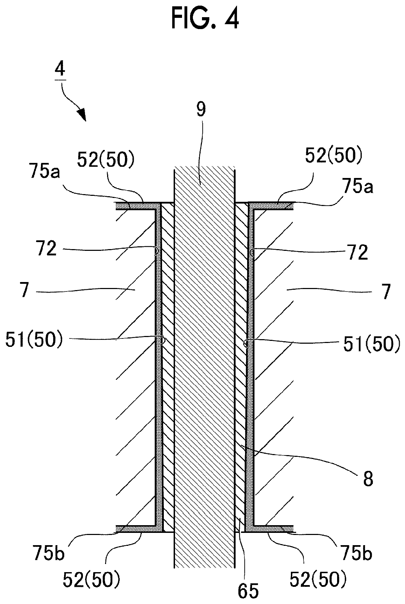

Fig. 1 schematically shows a cross-sectional view of a motor 100 in a direction perpendicular to a rotational axis direction. Fig. 2 schematically shows a cross-sectional view of the motor 100 in the rotational axis direction. Fig. 3 is an enlarged view showing the periphery of a slot (area X in Fig. 1) and schematically shows a cross-sectional view of a portion where a coil 9 protrudes from an end part of a slot 8. Fig. 4 is a view showing an interior of the slot 8, and is a cross-sectional view taken along a line A-A of Fig. 3.

A motor 100 includes a case 1, and a rotor 2, a stator 4, and a coil 9 accommodated in the case 1.

### <Case>

The case 1 includes a cylindrical part 1a and side plate parts 1b and 1c that close two ends in an axial direction of the cylindrical part 1a. As a material of the case 1, for example, an aluminum alloy (casting product), a resin material, or a combination thereof can be used.

### <Rotor>

As shown in Figs. 1 and 2, the rotor 2 is accommodated inside the case 1. As shown in Fig. 2, a rotating shaft 3 is attached to a center of the rotor 2 as an output shaft. Both ends of the rotating shaft 3 are supported by the side plate parts 1b and 1c through bearings 3a. In this manner, the rotor 2 is freely rotatable about the rotating shaft 3.

Permanent magnets 5 are internally mounted in the rotor 2. Specifically, as shown in Fig. 1, a plurality of (here, eight) permanent magnets 5 are placed on the same circumference at equal intervals. In this case, the permanent magnets 5 are installed such that the magnetic poles of adjacent permanent magnets are different from each other.

### <Stator>

The stator 4 has a stator core 41 and a coil 9 sealed in a slot 8.

A stator core 41 is provided by laminating and tightly fixing a plurality of electromagnetic steel sheets in the axial direction, and is provided with a yoke part 6 that is provided annularly as viewed from an end part in the axial direction as shown in Fig. 1, and with a plurality of tooth parts 7 extending from the yoke part 6 toward the rotor 2 side (inner peripheral side). The plurality of tooth parts 7 are provided by being arranged at equal intervals in the circumferential direction. Here, as an example shown in Fig. 1, twenty four tooth parts 7 are provided. The slot 8 is provided between each of the tooth parts 7. In addition, the tooth parts 7 are provided with a resin layer 50 that covers the tooth parts 7 in a small thickness by causing a resin composition to circle around the tooth parts 7.

A length of the stator 4 (stator core 41) in the axial direction is, for example, 100 mm to 200 mm. The motor 100 having the stator 4 having such a size is suitable for a drive motor for an automobile.

### <Coil>

The coil 9 has a rectangular U-shape and is wound to be accommodated in two slots 8 spaced across the tooth part 7. Here, the coil 9 is accommodated in a liner member 20 placed in the slot 8 by distributed winding. The coil 9 has a coil main body made of a good conductor such as copper and having a rectangular cross section, and a resin cover layer covering the surface of the coil main body. As for the resin cover layer, the same material as that to be described later as the resin material for the resin sealing part 65 or the resin layer 50 can be used.

### <Tooth Part>

The tooth parts 7 are provided in correspondence with the permanent magnets 5 of the rotor 2 described above, and by sequentially exciting the coils 9, the rotor 2 rotates due to attraction and repulsion with the permanent magnets 5 in correspondence with this sequential exciting.

The tooth part 7 has a large width in the circumferential direction on the outer peripheral side and has a small width on the inner peripheral side. The tooth part is tapered toward the inner peripheral side. At the end part on the inner peripheral side of the tooth part 7, tooth part tips 71 are formed to face each other in the circumferential direction to reduce the width of the slot 8.

### <Slot>

The slot 8 is a space between the adjacent tooth parts 7, and is provided so that inner wall surfaces 72 of the tooth parts 7 facing in the radial direction are parallel surfaces as shown in Figs. 3 and 4. A space between the tooth part tips 71 forms an opening on the inner peripheral side of the slot 8. The slot 8 has a plurality of coils 9 disposed on an outer peripheral side (yoke part 6 side), and a resin sealing part 65 filled in a space excluding the coils 9 and the resin layer 50 in the slot 8.

### <Resin Layer>

As shown in Figs. 3 and 4, the resin layer 50 covers a peripheral edge of the tooth part 7 by being integrally wrapped around with a resin composition, and has a tooth inner surface resin layer 51 covering the inner wall surface 72 of the tooth part 7, a tooth outer surface resin layer 52 covering an upper surface 75a and a lower surface 75b of the tooth part 7, and a yoke inner surface resin layer 53 covering an inner wall surface 62 of the yoke part 6.

The resin layer 50 covers the tooth part 7 by wrapping around the tooth part 7 in a small thickness by insert molding to tightly fix the stator 4, more specifically, the plurality of magnetic steel sheets laminated in the tooth part 7. The resin layer 50 does not necessarily need to wrap around the tooth part 7 in a small-thickness shape, and the tooth outer surface resin layer 52 may be omitted. By providing the tooth inner surface resin layer 51 and the yoke inner surface resin layer 53, insulation between the coil 9 and the inner wall surfaces of the slot 8, such as the inner wall surface 72 of the tooth part 7 and the inner wall surface 62 of the yoke part 6, is ensured, particularly in a step of accommodating the coil 9 in the slot 8 and forming the resin sealing part 65.

A thickness of the resin layer 50 is, for example, 50 µm or more and 500 µm or less. The lower limit value of the thickness is preferably 100 µm or more, and more preferably 150 µm or more. The upper limit value of the thickness is preferably 400 µm or less, and more preferably 300 µm or less. Thicknesses of the tooth inner surface resin layer 51, the tooth outer surface resin layer 52, and the yoke inner surface resin layer 53 may be the same as or different from each other. The lower limit value of the thickness is preferably within the above-described range from the viewpoint of ensuring flowability of the resin composition in an extremely narrow portion between a mold (mold core) and the wall surface of the slot 8 with respect to a stator axial length (that is, the thickness of the stator 4) during insert molding.

The upper limit value of the thickness is preferably within the above range from the viewpoint of securing the performance such as magnetic flux density and the degree of freedom in size of the coil 9 which can be used due to the increase in space utilization efficiency in the slot 8 in the structure in which the coil 9 is wound on the tooth part 7 and placed in the slot 8.

### <Material for Resin Layer>

As the resin material used for the resin layer 50, the resin material described as the resin material for the resin sealing part 65 described later can be used.

### <Resin Sealing Part>

The resin sealing part 65 is provided on the inner peripheral side of the slot 8 to seal the coil 9. The resin sealing part 65 is provided by insert molding.

### <Material for Resin Sealing Part>

The resin composition of the resin sealing part 65 preferably contains a thermosetting resin (A), a filler (B), a curing agent (C), and the like.

### [Thermosetting Resin (A)]

Examples of the thermosetting resin (A) include an epoxy resin, a cyanate resin, a polyimide resin, a benzoxazine resin, an unsaturated polyester resin, a phenol resin, a melamine resin, a silicone resin, a bismaleimide resin, a phenoxy resin, and an acrylic resin. As the thermosetting resin (A), one of the above kinds may be used alone, or two or more may be used in combination.

Among these, an epoxy resin, a phenol resin, and a phenoxy resin are preferable as the thermosetting resin (A) from the viewpoint of high insulating properties. An epoxy resin is particularly preferable from the viewpoint of securing the fluidity in an extremely narrow portion during molding.

Examples of the epoxy resin include bisphenol-type epoxy resins such as a bisphenol A-type epoxy resin, a bisphenol F-type epoxy resin, a bisphenol E-type epoxy resin, a bisphenol S-type epoxy resin, a bisphenol M-type epoxy resin (4,4'-(1,3-phenylenediisopridiene)bisphenol epoxy resin), a bisphenol P-type epoxy resin (4,4'-(1,4-phenylenediisopridiene)bisphenol epoxy resin), and a bisphenol Z-type epoxy resin (4,4'-cyclohexydiene bisphenol epoxy resin); novolac-type epoxy resins such as a phenol novolac-type epoxy resin, a cresol novolac-type epoxy resin, a trisphenol group methane-type novolac-type epoxy resin, a tetraphenol group ethane-type novolac-type epoxy resin, and a novolac-type epoxy resin having a condensed ring aromatic hydrocarbon structure; biphenyl-type epoxy resins; arylalkylene-type epoxy resins such as a xylylene-type epoxy resin and a biphenylaralkyl-type epoxy resin; naphthalene-type epoxy resins such as a naphthylene ether-type epoxy resin, a naphthol-type epoxy resin, a naphthalenediol-type epoxy resin, a bifunctional or tetrafunctional epoxy-type naphthalene resin, a binaphthyl-type epoxy resin, and a naphthalene aralkyl-type epoxy resin; anthracene-type epoxy resins; phenoxy-type epoxy resins; dicyclopentadiene-type epoxy resins; norbornene-type epoxy resins; adamantane-type epoxy resins; and fluorene-type epoxy resins. One of the above kinds may be used alone, or two or more may be used in combination.

Among the epoxy resins, one or two or more kinds selected from the group consisting of bisphenol-type epoxy resins, novolac-type epoxy resins, biphenyl-type epoxy resins, arylalkylene-type epoxy resins, naphthalene-type epoxy resins, anthracene-type epoxy resins, and dicyclopentadiene-type epoxy resins are preferable from the viewpoint of further improving the heat resistance and the insulation reliability.

Examples of the phenol resin include novolac-type phenol resins such as a phenol novolac resin, a cresol novolac resin, and a bisphenol A novolac resin, and resol-type phenol resins. One of the above kinds may be used alone, or two or more may be used in combination. Among the phenol resins, a phenol novolac resin is preferable.

The content of the thermosetting resin (A) is preferably 1% by mass or more, and more preferably 3% by mass or more with respect to the total amount of the resin composition of the resin sealing part 65. In addition, the content thereof is preferably 10% by mass or less, and more preferably 5% by mass or less with respect to the total amount of the resin composition of the resin sealing part 65.

In a case where the content of the thermosetting resin (A) is equal to or more than the above-described lower limit value, the handleability of the total amount of the resin composition of the resin sealing part 65 is improved, the resin sealing part 65 is easily formed, and the strength of the resin sealing part 65 is improved.

In a case where the content of the thermosetting resin (A) is equal to or less than the above-described upper limit value, the coefficient of linear expansion and the elastic modulus of the resin sealing part 65 are further improved, or the thermal conductivity is further improved.

### [Filler (B)]

The filler (B) in the present embodiment is used from the viewpoint of improving the thermal conductivity of the resin sealing part 65 and obtaining strength.

As the filler (B), an inorganic filler is preferable, and a thermal conductive filler is particularly preferable. More specific examples of the filler (B) include silica, alumina, boron nitride, aluminum nitride, and silicon carbide from the viewpoint of balancing the thermal conductive properties with the electrical insulating properties. One of the above kinds may be used alone, or two or more may be used in combination. Among these, the filler (B) preferably includes at least one selected from the group consisting of alumina and silica (fused silica and crystalline silica).

The content of the filler (B), that is, the content of the above-described inorganic filler is 90% by mass or more and 93% by mass or less with respect to the total amount of the resin composition (the entire thermosetting resin composition). In a case where the content of the inorganic filler is set to be within the above-described range, the flowability and the filling properties during the molding of the resin composition can be more effectively improved. More specifically, from the viewpoint of achieving the thermal conductivity described later, the lower limit thereof is preferably set to 90% by mass or more. On the other hand, from the viewpoint of flowability and filling properties, the content thereof is preferably set to 93% by mass or less.

The inorganic filler preferably contains 60% by mass or more of alumina, more preferably 65% or more, and still more preferably 70% or more with respect to the total amount of the thermosetting resin composition. In this manner, the thermal conductivity of the resin sealing part 65 (that is, the cured product of the thermosetting resin composition) can be increased.

### [Curing Agent (C)]

In a case where an epoxy resin or a phenol resin is used as the thermosetting resin (A) in the resin composition, the curing agent (C) is preferably further contained.

As the curing agent (C), one or more selected from a curing catalyst (C-1) and a phenol-based curing agent (C-2) can be used.

Examples of the curing catalyst (C-1) include organic metal salts such as zinc naphthenate, cobalt naphthenate, tin octylate, cobalt octylate, bisacetylacetonato cobalt (II), and trisacetylacetonato cobalt (III); tertiary amines such as triethylamine, tributylamine, and 1,4-diazabicyclo[2.2.2]octane; imidazoles such as 2-phenyl-4-methylimidazole, 2-ethyl-4-methylimidazole, 2,4-diethylimidazole, 2-phenyl-4-methyl-5-hydroxyimidazole, and 2-phenyl-4,5-dihydroxymethylimidazole; organic phosphorous compounds such as triphenylphosphine, tri-p-tolylphosphine, tetraphenylphosphonium·tetraphenylborate, triphenylphosphine·triphenylborane, and 1,2-bis-(diphenylphosphino)ethane; phenol compounds such as phenol, bisphenol A, and nonylphenol; organic acids such as an acetic acid, a benzoic acid, a salicylic acid, and a p-toluenesulfonic acid; and mixtures thereof. As the curing catalyst (C-1), one of the above kinds and derivatives thereof can be used alone, or two or more of the above kinds and derivatives thereof can be used in combination.

The content of the curing catalyst (C-1) is not particularly limited, but is preferably 0.001% by mass or more and 1% by mass or less with respect to the total amount of the resin composition.

In addition, examples of the phenol-based curing agent (C-2) include novolac-type phenol resins such as a phenol novolac resin, a cresol novolac resin, a trisphenol methane-type novolac resin, a naphthol novolac resin, and an aminotriazine novolac resin; modified phenol resins such as a terpene-modified phenol resin and a dicyclopentadiene-modified phenol resin; aralkyl-type resins such as a phenol aralkyl resin having a phenylene skeleton and/or a biphenylene skeleton and a naphthol aralkyl resin having a phenylene skeleton and/or a biphenylene skeleton; bisphenol compounds such as bisphenol A and bisphenol F; and resol-type phenol resins, and one of the above kinds may be used alone, or two or more may be used in combination.

Among these, novolac-type phenol resins or resol-type phenol resins are preferable as the phenol-based curing agent (C-2) from the viewpoint of improving the glass transition temperature and reducing the coefficient of linear expansion.

The content of the phenol-based curing agent (C-2) is not particularly limited, but is preferably 1% by mass or more, and more preferably 3% by mass or more with respect to the total amount of the resin composition. In addition, the content thereof is preferably 10% by mass or less, and more preferably 5% by mass or less with respect to the total amount of the resin composition.

### [Coupling Agent (D)]

The resin composition may contain a coupling agent (D). The coupling agent (D) can improve the wettability of the interface between the thermosetting resin (A) and the filler (B).

The coupling agent (D) is not particularly limited, but one or two or more coupling agents selected from, for example, an epoxy silane coupling agent, a cationic silane coupling agent, an aminosilane coupling agent, a titanate-based coupling agent, and a silicone oil-type coupling agent are preferably used.

The content of the coupling agent (D) is not particularly limited, but is preferably 0.05% by mass or more, and more preferably 0.1% by mass or more with respect to 100% by mass of the filler (B). In addition, the content thereof is preferably 3% by mass or less, and more preferably 2% by mass or less with respect to 100% by mass of the filler (B).

### [Phenoxy Resin (E)]

Furthermore, the resin composition may contain a phenoxy resin (E). In a case where the phenoxy resin (E) is contained, the flex resistance of the resin sealing part 65 can be improved. Moreover, the elastic modulus can be reduced, and the stress relaxation force of the resin sealing part 65 can be improved.

In addition, in a case where the phenoxy resin (E) is contained, the viscosity increases, and thus the flowability is reduced and the occurrence of voids and the like can be suppressed. In addition, in a case where the resin sealing part 65 is used in close contact with a metal member, the adhesion between the metal and the cured body of the resin composition can be improved.

Examples of the phenoxy resin (E) include a phenoxy resin having a bisphenol skeleton, a phenoxy resin having a naphthalene skeleton, a phenoxy resin having an anthracene skeleton, and a phenoxy resin having a biphenyl skeleton. In addition, it is also possible to use a phenoxy resin having a structure having a plurality of these skeletons.

The content of the phenoxy resin (E) is, for example, preferably 2% by mass or more, and 5% by mass or less with respect to the total amount of the resin composition.

### [Wax (Release Agent)]

The resin composition contains a wax. Accordingly, releasability from the mold core 80 after molding can be increased. Examples of the wax include natural wax such as carnauba wax, synthetic wax such as montanic acid ester wax and oxidized polyethylene wax, higher fatty acids such as zinc stearate and metal salts thereof, and paraffin. These may be used alone or in combination of two or more thereof. In particular, it is preferable to contain a montan ester wax.

In a case where a wax (release agent) is used, the content thereof is preferably 0.01% to 0.3% by mass and more preferably 0.02% to 0.1% by mass in the entire resin molding material, whereby the effect of improving the release properties can be reliably obtained. As a result, molding accuracy of the resin sealing part 65 can be improved.

### [Other Components]

The resin composition may further contain an adhesion promoter, a stress-reducing agent, a colorant, and the like as long as the effects of the present invention are not impaired.

### <Particle Size Distribution of Inorganic Filler>

In a particle size distribution of the inorganic filler, D90 is 40 µm or more and 70 µm or less, and D10 is 0.1 µm or more and 1.0 µm or less. D90 and D10 are particle diameters of the inorganic filler at cumulative frequencies of 90% and 10%, respectively, as measured using, for example, a laser diffraction particle size distribution analyzer, and are measured on a volume basis in the present embodiment. In addition, the particle size distribution of the inorganic filler is understood from an ash content of the resin composition.

D10 can also be regarded as an index indicating the proportion of fine particles, and the smaller the D10, the higher the proportion of fine particles and the better the filling properties of narrow portions such as gaps between coils. The lower limit of D10 is preferably 0.05 µm or more, and more preferably 0.1 µm or more. The upper limit of D10 is preferably 0.9 µm or less, and more preferably 0.8 µm or less.

When D10 is too small, that is, when the proportion of fine filler is too high, it is preferable from the viewpoint of filling properties of narrow portions; but, on the other hand, thixotropy increases, melt viscosity increases, and flowability tends to deteriorate. When D10 is too large, that is, when the amount of fine filler is too small, the melt viscosity of the resin decreases, but the filling properties of the narrow portion tend to deteriorate. Therefore, by setting D10 within the above-described range, it is possible to balance the filling properties of narrow portions, the flowability, and the melt viscosity.

D90 can also be regarded as an index indicating the proportion of coarse particles, and the larger the D90, the smaller the proportion of coarse particles and the better the filling properties of narrow portions. The lower limit of D90 is preferably 45 µm or more, and more preferably 50 µm or more. The upper limit of D90 is preferably 65 µm or less, and more preferably 60 µm or less.

When D90 is too small, that is, when the amount of coarse powder is too small, it is preferable from the viewpoint of filling properties of narrow portions, but on the other hand, thixotropy increases, the melt viscosity increases, and the flowability tends to deteriorate. When D90 is too large, that is, when the amount of coarse powder is too large, the melt viscosity of the resin decreases, but the filling properties of the narrow portion tend to deteriorate. Therefore, by setting D90 within the above-described range, it is possible to balance the filling properties of narrow portions, the flowability, and the melt viscosity.

In this way, by using D10 and D90 as two indices of the particle size distribution of the inorganic filler, the proportions of fine particles and coarse particles in the inorganic filler can be grasped, and both flowability and filling properties of narrow portions can be achieved.

A ratio D90/D10 of D90 to D10 of the particle size distribution is 100 or more and 300 or less. The lower limit of the ratio D90/D10 is preferably 125 or more, and more preferably 150 or more. The upper limit thereof is preferably 275 or less, and more preferably 250 or less. By setting the ratio D90/D10 within such a range, it is possible to achieve both favorable flowability and filling properties of narrow portions.

More specifically, when D90/10 is too large, that is, when the proportion of coarse particles is too low, the filling properties of narrow portions is improved; but, on the other hand, thixotropy increases, melt viscosity increases, and flowability tends to deteriorate. When D90/10 is too small, that is, when the proportion of coarse particles is too high, although the melt viscosity of the resin decreases, the filling properties of narrow portions tends to deteriorate. Therefore, by setting D90/10 within the above-described range, it is possible to balance the filling properties of narrow portions, the flowability, and the melt viscosity.

A ratio D90/D50 of D90 to D50 of the particle size distribution is 4 or more and 8 or less. As the ratio D90/D50 increases, the proportion of the coarse powder decreases, and the filling properties are improved. In particular, when the occupancy ratio of the coil 9 is increased, the space in which the resin sealing part 65 is provided (that is, the space between the coil 9 and the wall surface of the slot 8) becomes narrow, but even under such conditions, high filling properties can be achieved.

The lower limit of the ratio D90/D50 is preferably 4.5 or more, and more preferably 5 or more. The upper limit thereof is preferably 7.5 or less and, more preferably 7 or less.

When D90/50 is too large, that is, when the amount of coarse powder is too small, it is preferable from the viewpoint of filling properties of narrow portions, but on the other hand, thixotropy increases, the melt viscosity increases, and the flowability tends to deteriorate. In addition, when D90/50 is too small, that is, when the proportion of coarse particles is too high, although the melt viscosity of the resin decreases, the filling properties of narrow portions tends to deteriorate. Therefore, by setting D90/50 within the above-described range, it is possible to balance the filling properties of narrow portions, the flowability, and the melt viscosity.

### <Physical Properties of Resin Sealing Part>

Physical properties of a cured product of the resin material constituting the resin sealing part 65 are as follows. The same applies to physical properties of a cured product of the resin material constituting the resin layer 50.

### <Thermal Conductivity>

A thermal conductivity of the cured product of the resin material of the resin sealing part 65 is 3.2 W/mK or more. The lower limit of the thermal conductivity is preferably 4.0 W/mK or more, and more preferably 5.0 W/mK or more. The upper limit of the thermal conductivity is not particularly limited, but is 15 W/mK as a realistic value. By adjusting the content of the inorganic filler, a desired thermal conductivity can be obtained. By setting the thermal conductivity within the above-described range, the heat of the coil 9 can be effectively transferred to the stator core 41.

### <Glass Transition Temperature Tg>

A glass transition temperature Tg of the cured product of the resin composition of the resin sealing part 65 is 175°C or higher, preferably 190°C or higher, and more preferably 200°C or higher. The glass transition temperature Tg of the cured product is measured using a thermomechanical analyzer (TMA) under conditions of, for example, a measurement temperature range of 0°C to 320°C and a heating rate of 5 °C/min. In a case where the glass transition temperature Tg is within the above range, the motor 100 can be used at high temperatures, and is resistant to the heat generated from the coil 9, so that the motor 100 can be used at high output. In particular, the use temperature tends to increase with an increase in the output of the stator 4. As described above, by increasing the thermal conductivity of the resin sealing part 65, the heat generated in the coil 9 can be efficiently conducted to and dissipated from the stator core 41, and by setting the glass transition temperature Tg within the above-described range, the heat resistance of the resin can be increased and the design flexibility and margin can be increased.

### <Gelling Time>

A gelling time is 40 seconds or longer and 100 seconds or shorter. The gelling time of the resin composition is preferably 45 seconds or longer, and more preferably 50 seconds or longer, from the viewpoint of accelerating the molding cycle while promoting improvement in the moldability of the resin composition.

From the viewpoint of obtaining a cured product having excellent curability, the gelling time of the resin composition is preferably 100 seconds or shorter, and more preferably 75 seconds or shorter. The gelling time can be measured by melting the resin composition on a hot plate heated to 175°C, and then measuring a time (gelling time) until the resin composition becomes tack-free while kneading with a spatula.

### <Minimum Melt Viscosity>

The minimum melt viscosity is 1.0 Pa·s or more and 100.0 Pa·s or less. The minimum melt viscosity can be controlled by adjusting the type of the thermosetting resin used and the contained amount of the thermoplastic resin. The lower limit value of the minimum melt viscosity of the cured product of the resin composition of the resin sealing part 65 is, for example, 1.0 Pa·s or more. When the value exceeds the above-described value, there is a concern that the filling properties may decrease and voids or unfilled portions may occur.

The minimum melt viscosity of the cured product of the resin composition of the resin sealing part 65 refers to the lowest viscosity exhibited by the phenol resin composition when the cured product is melted by heating. More specifically, when the resin sealing part 65 is heated at a constant heating rate to melt the resin, the melt viscosity decreases with the temperature rise in the initial stage, and then the melt viscosity increases with the temperature rise when the temperature rise exceeds a certain level. The minimum melt viscosity refers to the melt viscosity at such a minimum point. The minimum melt viscosity of the resin composition layer can be measured by a dynamic viscoelasticity method.

The minimum melt viscosity varies depending on the size of the stator 4 (stator core 41). In a case of the small stator 4, the volume of the resin sealing part 65 is small, and in general, it is preferable that the viscosity is low in consideration of the filling properties of narrow portions. In a case of the large stator 4, the volume of the resin sealing part 65 is large, and when the viscosity is low, there is a tendency for the number of entrapment voids to increase, and the voids may not be completely crushed by the holding pressure, so that the viscosity is adjusted to be high to some extent.

### <Method for Producing Resin Composition>

Next, a method for producing the resin composition will be described.

For example, first, each of the raw material components described above is mixed by a known method to obtain a mixture. Further, the mixture is melt-kneaded to obtain a kneaded product. As the kneading method, for example, an extruder such as a monoaxial kneading extruder and a biaxial kneading extruder, or a roll-type kneader such as a mixing roll can be used, but the biaxial kneading extruder is preferably used. After cooling, the kneaded mixture can be formed into a predetermined shape such as a powdered or granular shape, a granular shape, a tablet shape, or a sheet shape.

Regarding a method of obtaining a powdered resin composition, for example, a method of pulverizing the kneaded product by using a pulverizing apparatus may be mentioned. The kneaded product that has been molded into a sheet may be pulverized. As the pulverizing apparatus, for example, a hammer mill, a stone mill-type grinding mill, a roll crusher, or the like can be used.

As a method of obtaining a granular or powdered resin composition, for example, a granulation method represented by a hot cut method of installing a die having a small diameter at an output of a kneading device and cutting a kneaded product in a molten state that is discharged through the die into a predetermined length with a cutter or the like, may be used. In this case, after obtaining a granular or powdered resin composition by a granulation method such as the hot-cut method, it is preferable to perform degassing before the temperature of the resin composition decreases excessively.

The resin composition obtained in the present embodiment contains an epoxy resin, a curing agent, and an inorganic filler. Since the content of the inorganic filler, the glass transition temperature of the cured product, and the elastic modulus of the cured product at elevated temperature are each within the above-described specific ranges, the resin composition is suitably used as the resin sealing part 65 used when sealing the coil 9 in the slot 8, thereby making it possible to obtain the resin sealing part 65 having excellent workability in filling the resin composition, excellent resin filling properties, and excellent thermal-history resistance of the cured product.

### <Summary of Embodiments>

The features of the present embodiment are summarized as follows.
<1> A thermosetting resin composition used in the stator 4, which has the stator core 41 including a plurality of tooth parts 7 and a plurality of slots 8 formed alternately in a circumferential direction, the coil 9 wound around and accommodated in the slot 8, and a sealing member (resin sealing part 65) provided in the slot 8 to seal the coil 9, for forming the sealing member (resin sealing part 65), the thermosetting resin composition containing:
   an epoxy resin;
   a curing agent; and
   an inorganic filler,
   in which, in a particle size distribution of the inorganic filler, D90 is 40 µm or more and 70 µm or less, and D10 is 0.1 µm or more and 1.0 µm or less.
<2> The thermosetting resin composition according to <1>, in which a ratio D90/D10 of the D90 to the D10 in the particle size distribution is 100 or more and 300 or less.
<3> The thermosetting resin composition according to <1> or <2>, in which a ratio D90/D50 of the D90 to D50 in the particle size distribution is 4 or more and 8 or less.
<4> The thermosetting resin composition according to any one of <1> to <3>, in which a content of the inorganic filler is 90% by mass or more and 93% by mass or less with respect to a total amount of the thermosetting resin composition.
<5> The thermosetting resin composition according to any one of <1> to <4>, in which the inorganic filler includes at least one selected from the group consisting of alumina, fused silica, and crystalline silica.
<6> The thermosetting resin composition according to <5>, in which the inorganic filler contains 60% by mass or more of the alumina with respect to the total amount of the thermosetting resin composition.
<7> The thermosetting resin composition according to any one of <1> to <6>, in which a gelling time is 40 seconds or longer and 100 seconds or shorter.
<8> The thermosetting resin composition according to any one of <1> to <7>, in which a thermal conductivity of a cured product of the thermosetting resin composition is 3.2 W/mK or more.
<9> The thermosetting resin composition according to any one of <1> to <8>, in which the epoxy resin includes at least one selected from the group consisting of a biphenyl-type epoxy resin, a bisphenol-type epoxy resin, a stilbene-type epoxy resin, a novolac-type epoxy resin, a polyfunctional epoxy resin, a phenol aralkyl-type epoxy resin, and a naphthol-type epoxy resin.
<10> The thermosetting resin composition according to any one of <1> to <9>, in which a glass transition point is 175°C or higher.
<11> The stator 4 including: the stator core 41 including a plurality of tooth parts 7 and a plurality of slots 8 formed alternately in a circumferential direction; the coil 9 wound around and accommodated in the slot 8; and a sealing member (resin sealing part 65) provided in the slot 8 to seal the coil 9,
   in which the sealing member (resin sealing part 65) is formed of a cured product of the thermosetting resin composition according to any one of <1> to <10>.

The embodiments of the present invention have been described above, but these are examples of the present invention and various configurations other than the above can be adopted.

### EXAMPLES

Hereinafter, the present invention will be described in detail with reference to Examples; however, the present invention is not intended to be limited to the description of these Examples.

The raw material components used in each of Examples and each of Comparative Examples will be shown below.

### (Epoxy resin)

· Epoxy resin 1: biphenyl-type epoxy resin (manufactured by Mitsubishi Chemical Corporation, YL-6677)
· Epoxy resin 2: biphenyl-type epoxy resin (manufactured by Mitsubishi Chemical Corporation, YX-4000HK)

### (Curing Agent)

· Curing agent 1: novolac-type phenol resin (manufactured by Sumitomo Bakelite Co., Ltd., PR-55617)
· Curing agent 2: triphenolmethane-type phenol resin (manufactured by Meiwa Plastic Industries, Ltd., MEH-7500)

### (Inorganic Filler)

· Inorganic filler 1: alumina 1 (fused spherical alumina (D50: 20 µm, sphericity: 0.92 or more))
· Inorganic filler 2: alumina 2 (fused spherical alumina (D50: 16.7 µm, sphericity: 0.92 or more))
· Inorganic filler 3: alumina 3 (fine alumina (D50: 0.7 µm))
· Inorganic filler 4: silica 1 (fused spherical alumina (D50: 10.8 µm, sphericity: 0.92 or more))
· Inorganic filler 4: silica 2 (fused spherical alumina (D50: 0.5 µm, sphericity: 0.92 or more))

### (Curing Accelerator)

· Curing accelerator 1: tetraphenylphosphonium 2,3-dihydroxynaphthalate
· Curing accelerator 2: tetraphenylphosphonium 4,4'-sulfonyldiphenolate

### (Other Additives)

· Release agent: carnauba wax (manufactured by Toa Kasei Co., Ltd., TOWAX-132)
· Coupling agent: N-phenyl-3-aminopropyltrimethoxysilane (manufactured by DuPont Toray Specialty Materials K.K., CF-4083)
· Stress-reducing agent: low-stress material (manufactured by Dow Corning Toray Co., Ltd., FZ-3730)
· Colorant 1: carbon black (manufactured by Mitsubishi Chemical Corporation, CARBON #5)

### (Preparation of Resin Composition)

First, each raw material blended according to Table 1 was mixed at normal temperature using a mixer, and then the mixture was roll-kneaded at a temperature equal to or higher than 70°C and equal to or lower than 110°C. Next, the obtained kneaded product was cooled, and then this was pulverized to obtain a resin composition.

The following measurements were made on the resin composition obtained in each example. The measurement results are shown together in Table 1.

### (Gelling Time)

The gelling time of the sealing resin composition obtained in each example was measured. Measurement of the gelling time was performed by melting the sealing resin composition over a hot plate heated to 175°C and then measuring the time taken by the sealing resin composition to cure (gelling time: seconds) while kneading with a spatula.

### (Glass Transition Temperature Tg)

For each example, a glass transition temperature Tg of a cured product of the obtained resin composition was measured as follows. First, the sealing resin composition was injection-molded using a transfer molding machine at a mold temperature of 175°C and an injection pressure of 9.8 MPa for a curing time of 3 minutes, and a test piece having a size of 15 mm × 4 mm × 4 mm was obtained. Next, the obtained test piece was post-cured at 175°C for 4 hours, and then measurement was performed using a thermomechanical analyzer (manufactured by Seiko Instruments, Inc., TMA100) under the conditions of a measurement temperature range of 40°C to 300°C and a rate of temperature increase of 5°C/min. From the measurement result, a glass transition temperature was calculated.

### (Thermal Conductivity)

For the resin composition obtained in each example, the resin composition was injection-molded using a transfer molding machine at a mold temperature of 175°C and an injection pressure of 9.8 MPa for a curing time of 3 minutes, and a cured body having a size of 10 mm × 10 mm × 1 mm was obtained.

The thermal conductivity of the obtained cured product was calculated using the following equation, from the thermal diffusion coefficient (α) measured by a laser flash method (half-time method), the specific heat (Cp) measured by a DSC method, and the density (ρ) measured according to JIS K 6911. The unit of the thermal conductivity is W/m·K. 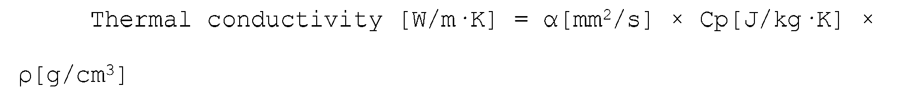 Thermal conductivity [W/m·K] = α[mm2/s] × Cp[J/kg·K] × ρ[g/cm3]

### (Particle Size Distribution)

A particle size distribution (D10, D50, and D90) of the inorganic filler of each example was measured by a laser diffraction particle size analyzer (SALD-7000, manufactured by Shimadzu Corporation). Based on the measurement results, ratios D90/10 and D90/D50 were calculated.

**[Table 1]**

| <Formulation of resin composition> | | Unit | Example 1 | Example 2 | Comparative Example 1 | Comparative Example 2 | Comparative Example 3 |
|---|---|---|---|---|---|---|---|
| Epoxy resin | Epoxy resin 1 | % by mass | 2.35 | 2.35 | - | 2.35 | - |
| | Epoxy resin 2 | % by mass | 2.35 | 2.35 | 5.20 | 2.35 | 5.20 |
| Curing agent | Curing agent 1 | % by mass | 2.60 | 2.60 | - | 2.60 | - |
| | Curing agent 2 | % by mass | - | - | 2.50 | - | 2.50 |
| Inorganic filler | Inorganic filler 1 (alumina 1) | % by mass | 81.50 | 81.50 | | - | 35.90 |
| | Inorganic filler 2 (alumina 2) | % by mass | - | - | 75.90 | 36.50 | - |
| | Inorganic filler 3 (alumina 3) | % by mass | 10.00 | - | - | 10.00 | 10.00 |
| | Inorganic filler 4 (silica 1) | % by mass | - | - | - | 45.00 | 45.00 |
| | Inorganic filler 5 (silica 2) | % by mass | - | 10.00 | 15.00 | - | - |
| Curing accelerator | Curing accelerator 1 | % by mass | - | - | 0.40 | - | 0.40 |
| | Curing accelerator 2 | % by mass | 0.20 | 0.20 | - | 0.20 | - |
| Other additives | Release agent | % by mass | 0.20 | 0.20 | 0.20 | 0.20 | 0.20 |
| | Coupling agent | % by mass | 0.20 | 0.20 | 0.20 | 0.20 | 0.20 |
| | Stress-reducing agent | % by mass | 0.30 | 0.30 | 0.30 | 0.30 | 0.30 |
| | Colorant | % by mass | 0.30 | 0.30 | 0.30 | 0.30 | 0.30 |
| Total | | % by mass | 100.00 | 100.00 | 100.00 | 100.00 | 100.00 |

| <Physical properties of resin composition> | | | | | | | |
|---|---|---|---|---|---|---|---|
| Gelling time | | sec | 90 | 90 | 55 | 90 | 55 |
| Glass transition temperature Tg | | °C | 180 | 180 | 145 | 180 | 145 |
| Thermal conductivity | | W/m·K | 5.0 | 3.2 | 3.0 | 1.5 | 1.5 |

| <Particle size distribution> | | | | | | | |
|---|---|---|---|---|---|---|---|
| D10 | | µm | 0.2 | 0.3 | 0.6 | 0.5 | 0.2 |
| D50 | | µm | 8.5 | 8.5 | 6.0 | 6.8 | 7.6 |
| D90 | | µm | 55 | 49 | 35 | 39 | 37 |
| D90/D10 | | | 261 | 158 | 59 | 74 | 159 |
| D90/D50 | | | 6.4 | 5.7 | 5.7 | 5.7 | 4.8 |

This application claims priority based on Japanese Patent Application No. 2023-213558 filed on December 19, 2023, the entire disclosure of which is incorporated herein by reference.

### REFERENCE SIGNS LIST

1 case
2 rotor
4 stator
5 permanent magnet
6 yoke part
7 tooth part
8 slot
9 coil
21 coil holding part
41 stator core
50 resin layer
62, 72 inner wall surface
65 resin sealing part
100 motor

## Claims

1. A thermosetting resin composition used in a stator, which has a stator core including a plurality of tooth parts and a plurality of slots formed alternately in a circumferential direction, a coil wound around and accommodated in the slot, and a sealing member provided in the slot to seal the coil, for forming the sealing member, the thermosetting resin composition comprising:
an epoxy resin;
a curing agent; and
an inorganic filler,
wherein, in a particle size distribution of the inorganic filler, D90 is 40 µm or more and 70 µm or less, and D10 is 0.1 µm or more and 1.0 µm or less.

2. The thermosetting resin composition according to Claim 1,
wherein a ratio D90/D10 of the D90 to the D10 in the particle size distribution is 100 or more and 300 or less.

3. The thermosetting resin composition according to Claim 1 or 2,
wherein a ratio D90/D50 of the D90 to D50 in the particle size distribution is 4 or more and 8 or less.

4. The thermosetting resin composition according to Claim 1 or 2,
wherein a content of the inorganic filler is 90% by mass or more and 93% by mass or less with respect to a total amount of the thermosetting resin composition.

5. The thermosetting resin composition according to Claim 1 or 2,
wherein the inorganic filler includes at least one selected from the group consisting of alumina, fused silica, and crystalline silica.

6. The thermosetting resin composition according to Claim 5,
wherein the inorganic filler contains 60% by mass or more of the alumina with respect to the total amount of the thermosetting resin composition.

7. The thermosetting resin composition according to Claim 1 or 2,
wherein a gelling time is 40 seconds or longer and 100 seconds or shorter.

8. The thermosetting resin composition according to Claim 1 or 2,
wherein a thermal conductivity of a cured product of the thermosetting resin composition is 3.2 W/mK or more.

9. The thermosetting resin composition according to Claim 1 or 2,
wherein the epoxy resin includes at least one selected from the group consisting of a biphenyl-type epoxy resin, a bisphenol-type epoxy resin, a stilbene-type epoxy resin, a novolac-type epoxy resin, a polyfunctional epoxy resin, a phenol aralkyl-type epoxy resin, and a naphthol-type epoxy resin.

10. The thermosetting resin composition according to Claim 1 or 2,
wherein a glass transition point is 175°C or higher.

11. A stator comprising:
a stator core including a plurality of tooth parts and a plurality of slots formed alternately in a circumferential direction;
a coil wound around and accommodated in the slot; and
a sealing member provided in the slot to seal the coil,
wherein the sealing member consists of a cured product of the thermosetting resin composition according to Claim 1 or 2.
